# EUROPEAN PATENT SPECIFICATION

(11) **EP 0 362 918 B1**
(45) Date of publication and mention of the grant of the patent: **05.01.1994**
(21) Application number: 89202296.3
(22) Date of filing: 13.09.1989
(51) Int. Cl.: F16K 1/226

(54) **Butterfly valve with a sealing element in elastomeric material with an internal metal reinforcement**
Mit einem inneren Metallverstärkungsring versehenes elastisches Dichtungselement für Drosselklappen
Soupape à papillon avec un joint d'étanchéité élastique pourvu d'un anneau métallique intérieur de renforcement

(30) Priority: 06.10.1988 IT 2221188
(43) Date of publication of application: 11.04.1990
(73) Proprietor: CAZZANIGA S.p.A., Milano (IT)
(72) Inventor: Pavanel, Roberto, Osnago (Como) (IT)
(74) Representative: Raimondi, Alfredo, Dott. Ing. Prof.

(56) References cited:
- DE-B- 1 902 606
- DE-B- 2 220 419
- GB-A- 1 302 440
- US-A- 3 782 684
- US-A- 3 840 042
- US-A- 3 940 108
- US-A- 4 176 675

## Description

The object of this invention is a butterfly valve with a sealing element in elastomeric material with an internal metal reinforcement.

To realize the interception of conducts in many fields of application, particularly in the hydraulic and pneumatic installations, as in the case of hydraulic, heating, irrigation, compressed air distribution and so on, valves with special required characteristics are widely used.

Such valves, among other things, must provide high characteristics of resistance to the fluid also in the presence of high pressures, they must be easily and quickly manouvrable, offer limited head loss in the "open" position and, furthermore, be low cost.

For this purpose the so-called "sphere" valves are widely used, which valves, however, even though offering a good performance, result as relatively expensive, due to the number of parts they are made of and the assembling operations thereof, and require, especially when of larger dimensions, a great deal of stress when manouvering.

So-called "butterfly" valves are also known, which valves feature a substantially disc-shaped shutter, which can be rotated between a position transversal to the flow, where it realizes the interception, and a position parallel to the flow in which the passage is allowed.

To realize the seals in these valves contact metal surfaces can be provided which, however, do not guarantee a full sealing.

Valves where a gasket in elastomeric material is set integrally to the perimeter of the disc and seals against the inner surface of the valve body are also known; these valves, however, display problems concerning the shutter lock, after a certain period of inactivity, due to the fact that the gasket is restrained in a seating of the shutter contrasting its deformation in one direction while it is solicited in an ortogonal direction to exert its sealing function.

This state of stress brings, with a deformation wide enough to realize the sealing, to values near to or exceeding the limit of elastic deformability of the material and under such conditions permanent modifications of the same material occur which can affect the seal and even bring about the aforementioned phenomena of adhesion.

Such valves, futhermore, result to be costly, as they require mechanical work for both the realization of the housing seating of the gasket on the shutter and the sealing surface of the gasket on the valve body, and also display, due to the space longitudinally occupied by the gasket, high flow head losses.

Valves of the butterfly type are also known, whith a sealing element made of a ring in elastomeric material housed in the external body, which however presents sealing problems between its outer, smooth surface, and the valve body, because the same seal is realized on a very wide surface and with limited radial loads; infiltrations of fluid between the sealing element and the valve body can moreover determine an inward buckling of the sealing element, which has a scarce rigidity because of its elastic deformability sufficient to ensure proper sealing, and therefore these valves result as suitable only for use at limited pressure values; besides, these valves, due to the characteristics of the sealing material, are used only with water.

A valve as mentioned above and showing the features of the first part of claim 1 is disclosed in document US-A-4 176 675.

It is therefore necessary to provide a butterfly type valve unexpensive to manufacture and capable of ensuring, at the same time, high standard performances either with water or with various fluids or gases, even at high pressures, long-term durability and absence of locking even following inactivity periods, while also offering a reduced flow head loss.

It is also necessary to provide a valve suitable for automated assembling through simple equipment, in order to reduce the production costs.

Such results are achieved by this invention, which has a butterfly valve comprising a substantially tubular external valve body, with flow pipe connections for fluids at its extremities, an annular seal of elastomeric material located in the valve body and encircling a disc-shaped, internally mobile shutter, equipped with a diametral axis shaft transversal to the valve body axis, protruding out of the same body and bearing the rotation commanding organs, the annular seal being equipped with an inside metal ring, axially extended substantially for the entire length of the seal and with two radially external sealing reliefs or protusions of shim (r), in radial correspondence of which there are related seatings in the valve body, an ample elastic deformation of the elastomeric material of the seal being allowed in the sealed areas, not laterally contrasted, the inside metal ring of the annular seal having a median area, in correspondence with the sealing area in contact with the shutter a relatively thick shim of elastomeric material being provided on the seal between the metal ring and the shutter, characterised in that the said median area of the metal ring of the annular seal has an external diameter substantially equal to the external diameter of the seal, and in that the said metal ring presents two areas of extremity, both in radial correspondence with the external sealing reliefs of the seal, which areas have a reduced diameter capable of leaving, between the outer surface of the seal and the surface of the metal ring, an elastomeric material thickness at least equal to the sealing reliefs shim protruding out of the surface of the seal.

The annular seal of elastomeric material presents at least one hole transversal to the axis of the same element, suitable for the passage of the shaft anchored to the shutter, a corresponding hole in the inside metal ring being present, with a larger diameter than the diameter of the hole in the elastomeric material, such as to leave a thickness of elastomeric material between the inner surface of the hole and the metallic material of the inside ring able to allow the installation of the shaft with an elastic swell sufficient to ensure the sealing of the shaft, without exceeding the elastic limit of the elastomeric material.

The sealing contact areas between the shutter and the annular seal are located laterally to the line of intersection of the same disc with its meridian plane of symmetry.

The shutter has a diametral hole in which the shutter shaft is inserted and anchored by forced mating, with the aid of a threaded profile on the surface of the same shaft.

The external sealing reliefs of the annular seal have a semicircular cross-section.

More details can be noted from the following description, with reference to the attached drawings in which the following is shown:
in figure 1, an axial section of a valve according to the invention;
in figure 2, an axial section of a valve according to the invention in a form alternative to figure No. 1;
in figure 3, a showing in exploded form of the main components of a valve according to the invention, aligned according to the correct automatic assembling sequence;
in figure 4, a cross section of a sealing element of a valve;
in figure 5, an enlargement of a portion of the sealing element and of the valve shutter, according to the V-V plane of figure 1.

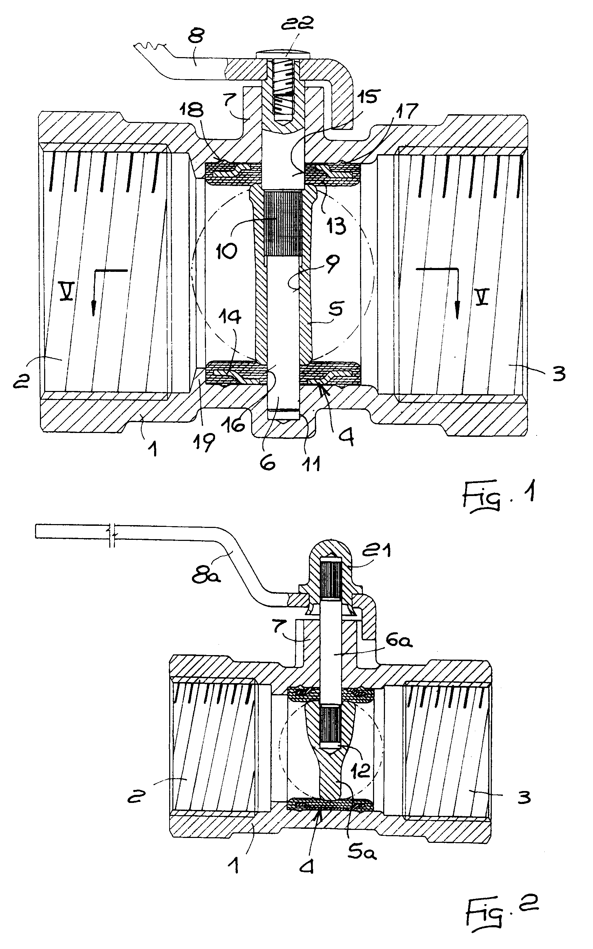

As shown in figure No. 1, a valve according to the invention, of the kind commonly referred to as "butterfly", includes an external body 1 , equipped with organs 2,3 connecting to a conduct, for instance of the threaded kind as per illustration, or shaped for other known ways of connection, such as flanges, welding or other.

Inside body 1 there is a sealing element 4 , in which a substantially disc-shaped shutter 5 is put, equipped with a shaft 6 crossing the collar 7 of body 1 and bearing, at the outside extremity, a plug lever 8 .

In the form as illustrated in figure 1, suitable for valves of dimensions bigger than a certain value, in relation with the mechanical characteristics of the materials used and the scaling of the parts, for example superior to 1" (25.4 mm), the shaft 6 completely goes across the crossing hole 9 of the shutter, where it is blocked in rotation by the threaded profile 10 , finding housing in a seating 11 inside the body 1 ; in the version shown in figure 2, suitable for valves of smaller dimensions, the shaft 6a supports an overhanging shutter 5a , being it inserted in the related dead hole 12 .

The sealing, in both versions, is ensured by the element 4 , inserted in a related seating of the body 1 and locking elasticly the perimeter of the shutter 5 or 5a , when in "closed" position.

The perimeter of the shutter, in both figures 1 and 2, is shown in the "open" position with a chain line.

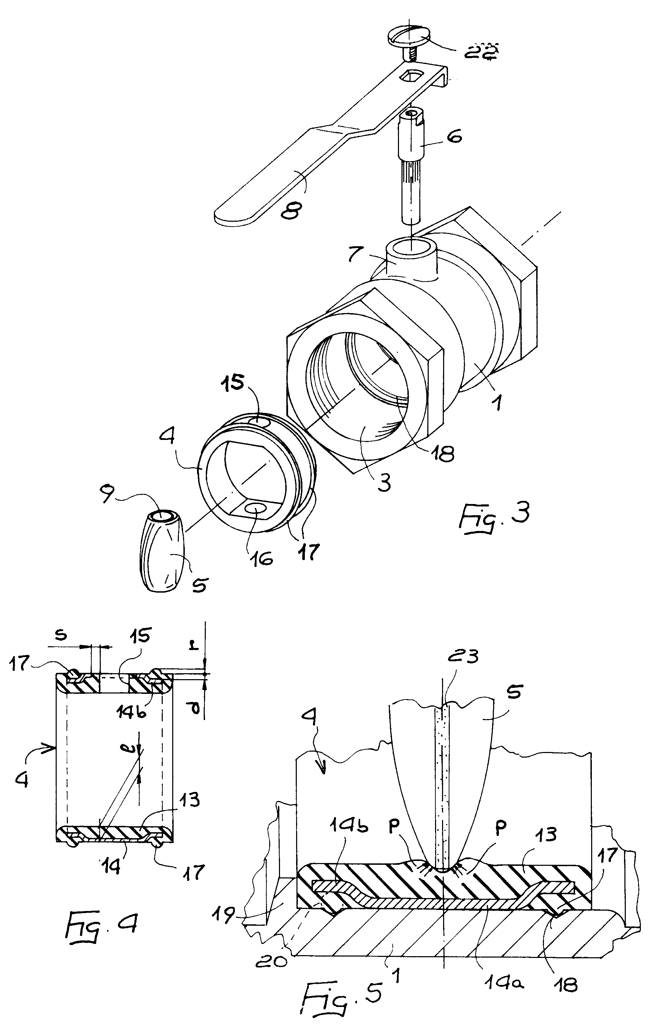

The element 4 , as better shown in figure 4, is made of a hollow cylindrical body in elastomeric material 13 , in which a shaped metal ring 14 is incorporated in the pressing phase, extended axially for a prevailing part of its length.

A radial hole 15 , placed in correspondence with the collar 7 , allows the shaft 6 to pass through and, in correspondence with it, a hole 16 (figure 1) permits the shaft to reach seating 11.

On the outer surface of element 4 there are two annular reliefs with semi-circular section 17 , in correspondence to which the body 1 shows related seatings 18 , better visible in figure 5, in which the reliefs 17 are housed with an elastic deformation capable of ensuring the sealing between the element 4 and the inner wall of the valve body 1 .

A relief 19 inside the valve body constitutes a ledging surface at an extremity of the sealing element, thus easing the assembly, as described hereinafter.

As shown in figure 5, the metal ring 14 shows a central portion 14a with a diameter substantially equal to the external diameter of the element 4; at the extremities, on the contrary, the ring 14 shows the portions 14b with an outer diameter inferior to the diameter of the element 4, thus leaving a "d" shim of elastomeric material between the same portions 14b and the outer surface of the element 4.

For more convenience, such a shim is substantially equal to the "r" protrusion of the reliefs 17 , located at the same extremities, and therefore, between the 14b portion and the supporting surfaces of the seating 18, a thickness of elastomeric material is included, substantially corresponding to the area occupied by a toroidal gasket 20 with a "r+d" diameter, shown in the illustration with a dashed line, thus realizing optimal sealing conditions, similar to the performance offered by an "O-ring" toroidal gasket, well renowned thanks to the width of the elastic total excursion the elastomeric material is permitted.

In correspondence with the hole 15 , as indicated in figure 4, and also in correspondence with the hole 16, whether existing, the metal ring 14 shows a whole with an inside diameter superior to the diameter of hole 15 or 16, since a "s" shim of elastomeric material has been left between the hole surface and the hole border of the metal ring.

Such a "s" shim allows an insertion of the 6 or 6a shaft, with elastic deformation of the elastomeric material 13 of the element 4, such as to ensure the sealing on the surface of the same shaft outward, without requiring further gasket elements on the same shaft within the collar 7 .

In its intermediate position 14a the metal ring 14 is designed to leave an "e" thickness of elastomeric material 13 , as shown in figure 4, raised enough to offer an elastic compliance towards the shutter 5 which ensures its sealing capability against its outline when in "closed" position.

In fact, the deformation of the elastomeric material shows a high value; however, the relative deformation, i.e. the ratio between the amplitude of the deformation and the thickness of the material experiencing it, remains within limited values, thanks to the value of the "e" thickness, and also the possibility of swelling of the same material laterally to the shutter is left, as shown, in a magnified form to enhance the phenomenon, in figure 5.

This, then, permits to reach a high elastic interference, as described above, between shutter and sealing element, which ensures an optimal sealing capability even under considerable pressures, without it requiring to exceed or near the limit of elastic deformation of the elastomeric material, so avoiding the occurrence of such phenomena as permanent deformation of the material, adhesion to the sealing surface after a certain inactivity period and similar mishaps, which can occur along with a greater relative deformation of the material itself.

The structure, according to the invention, results furthermore convenient from an economic point of view, by reducing the number of parts of which the valve is made up and permitting a particularly simple assembling, realizable through automated processes.

In fact, as it can be noted in figure 3, where the parts are shown aligned in the assembling sequence, the assembling itself process is firstly conceived with the insertion of the sealing element in the valve body up to the ledge against the relief 19; this can be achieved through a pressing organ, thanks to the rigidity given to the sealing element by the internal metal ring 14 , which makes it capable of bearing a pressing action without deformations; the alignment between the hole 15 and the collar 7 can be easily obtained through a simple device connected to the presser.

Subsequently, the shutter 5, or 5a, is inserted with its hole 9 or 12 aligned with the hole 15 and the collar 7, then the shaft 6 or 6a which locks in the shutter through the threaded profile 10 .

In the case of valves of small dimensions, as per version illustrated in figure 2, the manouvering lever 8a, and the related fastening cap 21 , are also locked in the shaft 6a by pressing; in the case of valves of greater dimensions, in the realized form as in figure 1, the manouvering lever 8 is subsequently blocked through the screw 22.

According to a further aspect of the invention, it results as particularly advantageous to realize the shutter, preferably in brass, by forming, removing the rags in correspondence with the meridian plane by trimming, without any further work on the tool in those areas.

In fact, although the removal of the forming rags by way of trimming leaves a rough area 23 along the perimeter of the shutter, as shown in a magnified form in figure 5, the seal is realized on the areas of maximum pressure of the elastomeric material on the shutter denoted with the P arrows in figure 5, where the shutter shows smooth forming surfaces.

In the central zone of the contact area between sealing element and shutter, in correspondence with the area 23 of the shutter itself, the elastomeric material of the sealing element tends to assume a continuously curving position, as magnified in figure 5 for greater graphic enhancement, which therefore corresponds to the disjuction from the shutter, or at least to a noticeable decrease of the elastic reaction load on the rough area 22 , which, therefore, is not interested in the seal and whose state of roughness cannot, then, affect the seal itself.

The absence of sealing elements on the shutter, moreover, permits to give it a profile, in the direction of the flow, as illustrated in figure 5, which displays reduced formation of whirls and allows a gradual acceleration and an equal gradual recovery of pressure of the fluid at the passage around it, so rendering the head losses due to its presence very little, negligible in most uses.

The presence of the metal reinforcement inside the sealing element allows the elastomeric material it is made of to be chosen based on its best characteristics from the point of view of the seal and the resistance to the fluid, regardless of its mechanical resistance; this permits to use the valve, according to the findings, in presence of various fluids and not just water, as well as gases, compressed air and the like.

## Claims

1. Butterfly valve comprising a substantially tubular external valve body (1), with flow pipe connections (2, 3) for fluids at its extremities, an annular seal (4) of elastomeric material located in the valve body (1) and encircling a disc-shaped, internally mobile shutter (5; 5a), equipped with a diametral axis shaft (6; 6a) transversal to the valve body axis, protruding out of the same body (1) and bearing the rotation commanding organs (8), the annular seal (4) being equipped with an inside metal ring (14), axially extended substantially for the entire length of the seal (4), and with two radially external sealing reliefs or protusions (17) of shim (r), in radial correspondence of which there are related seatings (18) in the valve body (1), an ample elastic deformation of the elastomeric material of the seal (4) being allowed in the sealed areas, not laterally contrasted, the inside metal ring (14) of the annular seal (4) having a median area, in correspondence with the sealing area in contact with the shutter (5; 5a), a relatively thick shim of elastomeric material being provided on the seal (4) between the metal ring (14) and the shutter (5; 5a), characterised in that the said median area of the metal ring of the annular seal (4) has an external diameter substantially equal to the external diameter of the seal (4), and in that the said metal ring (14) presents two areas of extremity, both in radial correspondence with the external sealing reliefs (17) of the seal (4), which areas have a reduced diameter capable of leaving, between the outer surface of the seal (4) and the surface of the metal ring (14), an elastomeric material thickness (d) at least equal to the sealing reliefs (17) shim (r) protruding out of the surface of the seal (4).

2. Butterfly valve, according to claim No. 1, characterized by the fact that the annular seal (4) of elastomeric material presents at least one hole (15) transversal to the axis of the same element, suitable for the passage of the shaft (6) anchored to the shutter (5), a corresponding hole in the inside metal ring (14) being present, with a larger diameter than the diameter of the hole (15) in the elastomeric material, such as to leave a thickness (s) of elastomeric material (13) between the inner surface of the hole and the metallic material of the inside metal ring able to allow the installation of the shaft (6;6a) with an elastic wall sufficient to ensure sealing of the shaft, without exceeding the elastic limit of the elastomeric material (13).

3. Butterfly valve, according to claim No. 1, characterized by the fact that the sealing contact areas between the shutter (5;5a) and the annular seal (4) are located laterally to the line of intersection of the same disc with its meridian plane of symmetry.

4. Butterfly valve, according to claim No. 1, characterized by the fact that the shutter (5a) has a diametral hole in which the shutter shaft (6a) is inserted and anchored by forced mating, with the aid of a threaded profile on the surface of the shaft itself.

5. Butterfly valve, according to claim No. 1, characterized by the fact that the external sealing reliefs (17) of the annular seal (4) have a semicircular cross-section.

## Patentansprüche

1. Absperrklappe aufweisend: einen im wesentlichen rohrförmigen äußeren Ventilkörper (1) mit Durchflußrohrverbindungen (2, 3) für Fluide an seinen äußeren Enden, eine ringförmige Dichtung (4) aus elastomerem Material, welche in dem Ventilkörper (1) untergebracht ist und eine scheibenförmige, im Inneren bewegliche Verschlußklappe (5; 5a) umgibt, welche mit einer diametralen Achs-Welle (6; 6a) ausgestattet ist, welche zu der Ventilkörperachse transversal ist, aus dem gleichen Körper (1) hervorspringt und die rotationsbetätigenden Organe (8) trägt, wobei die ringförmige Dichtung (4) mit einem innenseitigen Metalling (14) ausgestattet ist, welcher sich im wesentlichen über die gesamte Länge der Dichtung (4) in Axialrichtung erstreckt, und wobei die ringförmige Dichtung (4) mit zwei in Radialrichtung gerichteten, äußeren Dichtungs-Reliefs oder -Vorsprüngen (17) eines Ausfüll- bzw. Ausgleichsstücks (r) ausgestattet ist, während in radialer Entsprechung zu diesen Dichtungs-Reliefs oder - Vorsprüngen zugeordnete Sitze (18) in dem Ventilkörper (1) vorhanden sind, wobei eine weite elastische Deformation des elastomeren Materials der Dichtung (4) in den Dichtungsbereichen, nicht in seitlicher Richtung kontrastiert, ermöglicht ist, wobei ferner der innere Metalling (14) der ringförmigen Dichtung (4) entsprechend dem Dichtungsbereich, welcher sich in Berührung mit der Verschlußklappe (5; 5a) befindet, einen mittleren Bereich aufweist und wobei ein verhältnismäßig dickes Ausfüll- bzw. Ausgleichsstück aus elastomerem Material auf der Dichtung (4) zwischen dem Metalling (14) und der Verschlußklappe (5; 5a) vorgesehen ist, **dadurch gekennzeichnet,** daß der genannte mittlere Bereich des Metallringes der ringförmigen Dichtung (4) einen äußeren Durchmesser aufweist, der im wesentlichen dem äußeren Durchmesser der Dichtung (4) gleich ist, und daß der genannte Metallring (14) zwei Randbereiche aufweist, welche beide in radialer Zuordnung zu den äußeren Dichtungs-Reliefs (17) der Dichtung (4) sind, welche Bereiche einen reduzierten Durchmesser aufweisen, welcher dazu befähigt ist, zwischen der äußeren Oberfläche der Dichtung (4) und der Oberfläche des Metallringes (14) eine Stärke (d) des elastomeren Materials zu lassen, welche mindestens gleich dem Ausfüll- bzw. Ausgleichsstück (r) der Dichtungs-Reliefs (17) ist, welche von der Oberfläche der Dichtung (4) aus vorspringen.

2. Absperrklappe nach Anspruch 1, **gekennzeichnet durch** die Tatsache, däß die ringförmige Dichtung (4) aus elastomerem Material mindestens eine Bohrung (15) aufweist, welche transversal zu der Achse des gleichen Elements und für einen Durchgang der Welle (6) geeignet ist, welche mit der Verschlußklappe (5) verankert ist, wobei eine entsprechende Bohrung in dem inneren Metallring (14) vorhanden ist, welche einen größeren Durchmesser als der Durchmesser der Bohrung (15) in dem elastomeren Material aufweist, derart, daß eine Stärke (S) des elastomeren Materials (13) zwischen der inneren Oberfläche der Bohrung und dem metallischen Material des inneren Metallringes gelassen wird, welche dazu befähigt ist, den Einbau der Welle (6; 6a) mittels einer elastischen Wandung zu erlauben, welche ausreichend ist, um die Abdichtung der Welle sicherzustellen, ohne die Elastizitätsgrenze des elastomeren Materials (13) zu überschreiten.

3. Absperrklappe nach Anspruch 1, **gekennzeichnet durch** die Tatsache, däß die Dichtungs-Kontaktbereiche zwischen der Verschlußklappe (5; 5a) und der ringförmigen Dichtung (4) in Bezug auf die Schnittlinie der gleichen Scheibe mit ihrer Meridianebene der Symmetrie seitlich angeordnet sind.

4. Absperrklappe nach Anspruch 1, **gekennzeichnet durch** die Tatsache, daß die Verschlußklappe (5a) eine diametrale Bohrung aufweist, in welche die Weile (6a) der Verschlußklappe eingesetzt und mittels erzwungener Zusammenpassung mit Hilfe eines mit Gewinde versehenen Profiles auf der Oberfläche der Welle selbst verankert ist.

5. Absperrklappe nach Anspruch 1, **gekennzeichnet durch** die Tatsache, daß die äußeren Dichtungs-Reliefs (17) der ringförmigen Dichtung (4) einen halbkreisförmigen Querschnitt aufweisen.

## Revendications

1. Vanne à papillon comprenant un corps de vanne externe sensiblement tubulaire (1), avec des liaisons à tube d'écoulement (2, 3) pour des fluides à ses extrémités, un joint d'étanchéité annulaire (4) en matière élastomère placé dans le corps de vanne (1) et entourant un obturateur intérieurement mobile et en forme de disque (5 ; 5a), muni d'un arbre à axe diamétral (6, 6a) transversal à l'axe du corps de vanne, faisant saillie de ce même corps (1) et portant les organes de commande en rotation (8), le joint d'étanchéité annulaire (4) étant muni d'une bague métallique intérieure (14) s'étendant axialement sensiblement sur toute la longueur du joint d'étanchéité (4), et avec deux protubérances ou saillies (17) radialement externes d'étanchéité d'épaisseur (r), en correspondance radiale desquelles se trouvent des sièges (18) dans le corps de vanne (1), une ample déformation élastique de la matière élastomère du joint d'étanchéité (4) étant permise dans les surfaces d'étanchéité, noncontrastées latéralement, la bague métallique intérieure (14) du joint d'étanchéité annulaire (4) présentant une surface médiane en correspondance avec la surface d'étanchéité en contact avec l'obturateur (5 ; 5a), une partie en matière élastomère relativement épaisse étant prévue sur le joint d'étanchéité (4) entre la bague métallique (14) et l'obturateur (5 ; 5a), caractérisée en ce que ladite surface médiane de la bague métallique du joint d'étanchéité annulaire (4) a un diamètre externe sensiblement égal au diamètre externe du joint d'étanchéité (4), et en ce que ladite bague métallique (14) présente deux surfaces d'extrémité, toutes deux en correspondance radiale avec les protubérances d'étanchéité externes (17) du joint d'étanchéité (4), ces surfaces présentant un plus petit diamètre pouvant laisser, entre la surface extérieure du joint d'étanchéité (4) et la surface de la bague métallique (14), une épaisseur de matière élastomère (d) au moins égale aux protubérances d'étanchéité (17) d'épaisseur (r) faisant saillie de la surface du joint d'étanchéité (4).

2. Vanne à papillon selon la revendication 1, caractérisée par le fait que le joint d'étanchéité annulaire (4) en matière élastomère présente au moins un trou (15) transversal à l'axe de ce même élément, prévu pour le passage de l'arbre (6) ancré à l'obturateur (5), un trou correspondant à la bague métallique intérieure (14) étant présent, avec un diamètre supérieur au diamètre du trou (15) de la matière élastomère, afin de laisser une épaisseur (s) de matière élastomère (13) entre la surface intérieure du trou et la matière métallique de la bague métallique intérieure pour permettre de placer l'arbre (6 ; 6a) avec une paroi élastique suffisante pour assurer l'étanchéité de l'arbre, sans dépasser la limite élastique de la matière élastomère (13).

3. Vanne à papillon selon la revendication 1, caractérisée par le fait que les surfaces de contact d'étanchéité entre l'obturateur (5 ; 5a) et le joint d'étanchéité annulaire (4) sont placées latéralement à la ligne d'insertion de ce même disque avec son plan méridien de symétrie.

4. Vanne à papillon selon la revendication 1, caractérisée par le fait que l'obturateur (5a) présente un trou diamétral dans lequel l'arbre (6a) de l'obturateur est inséré et ancré par accouplement à force, à l'aide d'un profilé fileté sur la surface de l'arbre lui-même.

5. Vanne à papillon selon la revendication 1, caractérisée par le fait que les protubérances d'étanchéité externes (17) du joint d'étanchéité annulaire (4) présentent une section transversale semi-circulaire.
